# EUROPÄISCHE PATENTSCHRIFT

(11) **EP 1 493 612 B1**
(45) Veröffentlichungstag und Bekanntmachung des Hinweises auf die Patenterteilung: **20.01.2010**
(21) Anmeldenummer: 04012301.0
(22) Anmeldetag: 25.05.2004
(51) Int. Cl.: B60N 2/02, B60N 2/64, B60N 2/44

(54) **Fahrzeug-Sitzabschnitt-Verstellvorrichtung**
Adjusting device for an element of a vehicle seat.
Dispositif de réglage d'un élément de siège de véhicule.

(30) Priorität: 03.07.2003 DE 10330028
(43) Veröffentlichungstag der Anmeldung: 05.01.2005
(73) Patentinhaber: IMS Gear GmbH, 78166 Donaueschingen (DE)
(72) Erfinder: Hofschulte, Wolfram-H., 79848 Bonndorf (DE); Margrander, Andreas, 76726 Germersheim (DE); Ritter, Sven, Oxford 0X 37 FF (GB); Rackl, Rudolf, 80339 München (DE); Feulner, Stefan, 85276 Pfaffenhofen (DE)
(74) Vertreter: Patentanwälte Westphal, Mussgnug & Partner

(56) Entgegenhaltungen:
- EP-A- 1 142 751
- DE-A- 19 750 223
- DE-C- 19 737 271
- US-A- 4 924 162
- US-A- 5 857 743

## Beschreibung

Die Erfindung bezieht sich auf eine Fahrzeug-Sitzabschnitt-Verstellvorrichtung mit den oberbegrifflichen Merkmalen des Patentanspruchs 1 bzw. auf eine Schaltungsanordnung zum Ansteuern einer derartigen Fahrzeug-Sitzabschnitt-Verstellvorrichtung.

In Fahrzeugen, insbesondere Personenkraftwagen der gehobenen Klassen, sind Sitze eingebaut, welche eine Fahrzeug-Sitzabschnitt-Verstellvorrichtung aufweisen, um die Sitzabschnittbreite der Rückenlehne und/oder der Seitenwange als Sitzabschnittelement des unteren Sitzteils verstellen zu können. Die Verstellung der Rückenlehnenbreite und der Seitenwange eines Sitzes dient dabei sowohl als Komforteinstellung als auch in Verbindung mit einem aktiven, personenbezogenen Eingriff zur Erhöhung des Seitenhaltes und somit der damit verbundenen Fahrsicherheit.

Eine bekannte Fahrzeug-Sitzabschnitt-Verstellvorrichtung weist ein Lehnen- bzw. Sitzabschnitt-verstellelement zum Verstellen der Breite eines Lehnenabschnitts eines Sitzes in einer Verstellrichtung, eine Befestigungseinrichtung zum beweglichen Lagern des Sitzabschnitt-Verstellelements am Sitz und eine antreibbare Verstelleinrichtung zum Verstellen des Lehnen-Verstellelements aus einer bzw. zu einer Ruhestellung gegenüber der Befestigungseinrichtung auf. Die Verstellung der Lehnenbreite erfolgt dabei über einen Kunststoffflügel als Lehnen-Verstellelement, der in einer Führung gelagert ist und mittels eines Getriebes über Bowdenzüge betätigt wird. Dies bedingt einen sehr aufwändigen Aufbau und entsprechend im Fall einer erforderlichen Reparatur hohe Reparaturkosten.

Als weiterer Stand der Technik wird die US 4,924,162 genannt.

Die Aufgabe der Erfindung besteht darin, eine Fahrzeug-Sitzabschnitt-Verstellvorrichtung vorzuschlagen, die einen vereinfachten Aufbau aufweist, insbesondere mit Blick auf Platzbedarf und Anzahl der Bauteile reduziert ist, sowie den Komfort und die Fahrsicherheit erhöht.

Diese Aufgabe wird durch eine Fahrzeug-Sitzabschnitt-Verstellvorrichtung mit den Merkmalen des Patentanspruchs 1 gelöst.

Erfindungsgemäß weist eine Fahrzeug-Sitzabschnitt-Verstellvorrichtung ein Sitzabschnitt-Verstellelement zum Verstellen der Breite eines Sitzabschnitts eines Sitzes in einer Verstellrichtung, eine Befestigungseinrichtung zum beweglichen Lagern des Sitzabschnitt-Verstellelements am Sitz und eine antreibbare Verstelleinrichtung zum Verstellen des Sitzabschnitt-Verstellelements aus einer bzw. zu einer Ruhestellung gegenüber der Befestigungseinrichtung auf. Unter einem Sitzabschnitt wird dabei insbesondere der seitliche Bereich der Rückenlehne, d. h. eine Verstellmöglichkeit für die Lehnenbreite, sowie der seitliche Bereich der Sitzfläche, d. h. die Seitenwange eines Sitzes, verstanden. Übertragbar ist dieses Konzept jedoch auch auf weitere Sitzabschnitte.

Die Schaltungsanordnung weist neben den mechanischen Elementen der Sitzabschnitt-Verstellvorrichtung einen elektromotorischen Antrieb zum Antreiben der Verstelleinrichtung, eine Beschleunigungs-Bestimmungseinrichtung zum Bestimmen einer momentan wirkenden und/oder zu erwartenden Beschleunigung in Seitenrichtung des Sitzes und eine Steuereinrichtung zum Ansteuern des Antriebs derart auf, dass das Sitzabschnitt-Verstellelement zumindest die Breite einer Seitenwange auf der Seite des Sitzes zeitweilig vergrößert, welche der Beschleunigungsrichtung entgegen gerichtet ist.

Ein Navigationssystem-Anschluss dient zum Übertragen von Wegeverlaufdaten eines vorausliegenden Straßenverlaufs, wobei die Steuereinrichtung zum Bestimmen einer zu erwartenden seitlichen Beschleunigung mit Hilfe der Wegeverlaufdaten und Daten einer momentanen Fahrzeugbewegung ausgebildet ist.

Vorteilhafte Ausgestaltungen sind Gegenstand abhängiger Ansprüche.

Bei einer bevorzugten Lösung gemäß einem ersten Ausführungsbeispiel ist das Sitzabschnitt-Verstellelement als ein schräg zu dessen Längsrichtung und/oder bogenförmig verlaufendes Widerlager für die Verstelleinrichtung ausgebildet und die Verstelleinrichtung zum Verstellen des Sitzabschnitt-Verstellelements ist derart verstellbar ausgebildet und angeordnet, dass ein Teil der Verstelleinrichtung sich längs des Widerlagers und in Berührung mit diesem bewegt.

Gemäß einem zweiten Ausführungsbeispiel ist das Sitzabschnitt-Verstellelement als ein Widerlager für die Verstelleinrichtung ausgebildet und die Verstelleinrichtung weist ein Auslegerelement auf, welches sich in eine Bewegungsebene der Sitzabschnitt-Verstelleinrichtung hinein seitlich von der Verstelleinrichtung erstreckt, wobei ein Abschnitt des Auslegerelements zum Bewegen längs des Widerlagers und in Berührung mit diesem ausgebildet ist.

Dabei ist das Sitzabschnitt-Verstellelement vorteilhafterweise bezüglich seiner Breite im Bereich des bogenförmigen Widerlagers in Richtung zu einem Lagerpunkt des Sitzabschnitt-Verstellelements an der Befestigungseinrichtung hin breiter werdend ausgebildet. Das Sitzabschnitt-Verstellelement ist dabei insbesondere als eine Seitenwange zum Vor- bzw. Zurückbewegen eines Lehnenabschnitts ausgebildet.

Vorteilhafterweise ist das Widerlager an der Seite des Sitzabschnitt-Verstellelements ausgebildet, welche gegenüber der Seite des Sitzabschnitt-Verstellelements liegt, welche zum Vor- bzw. Zurückverstellen eines Polsterelements ausgebildet ist. Das Widerlager des Sitzabschnitt-Verstellelements ist zweckmäßigerweise konkav ausgebildet.

Das Widerlager des Sitzabschnitt-Verstellelements ist von einem Verschwenk-Lager des Sitzabschnitt-Verstellelements zu dessen Lagerung an der Befestigungseinrichtung beabstandet ausgebildet.

Die Verstelleinrichtung weist ein Hebelelement mit einem äußeren Abschnitt auf, wobei der äußere Abschnitt zum Bewegen in Berührung mit dem Widerlager ausgebildet ist. Dabei sind das Sitzabschnitt-Verstellelement und das Hebelelement voneinander beabstandet gelagert und um deren Lagerpunkte gegenüber einer gemeinsamen Ebene verschwenkbar angeordnet.

Die Verstelleinrichtung ist in einer Richtung schräg, insbesondere etwa senkrecht zur Verstellrichtung der Breite des Sitzabschnitts bewegbar.

Das Auslegerelement weist einen in der Bewegungsebene bogenförmigen, zumindest teilweise konvexen Außenumfang auf und ist insbesondere radförmig ausgebildet.

Die Spindelachse des Spindelantriebs erstreckt sich in einer Längsrichtung im Wesentlichen parallel zur Längsausrichtung des Sitzabschnitt-Verstellelements in einer von dessen Stellungen, insbesondere Grundstellungen.

Es handelt sich somit insbesondere um eine Vorrichtung, bei der auf einer Spindelwelle, insbesondere auf derem freien vorderen Ende, ein nicht mitrotierendes Spindelwiderlager für das Sitzabschnitt-Verstellelement gelagert ist, wobei sich das Spindelwiderlager in einer Stellung, insbesondere der Grundstellung, im Wesentlichen parallel zum Sitzabschnitt-Verstellelement erstreckt und wobei das Teil der Verstelleinrichtung, der sich in Berührung mit dem Spindelwiderlager bewegt, zwischen dem Widerlager und dem Spindelwiderlager angeordnet ist und bewegt wird.

Die Vorrichtung weist eine Anordnung der Einzelelemente in Längserstreckung jeweils im Wesentlichen parallel zu einander auf, wenn sich die Verstellvorrichtung in einer ausgewählten Stellung, insbesondere Grundstellung befindet.

Die Vorrichtung weist eine Öffnung oder Ausnehmung in der Wandung des Sitzabschnitt-Verstellelements zur Aufnahme einzelner Elementabschnitte der Vorrichtung in zumindest einer Grundstellung auf.

Ein elektromotorischer Antrieb dient zum Verstellen der Verstelleinrichtung und zum Verstellen des Sitzabschnitt-Verstellelements.

Ein Beschleunigungssensor dient zum Erfassen einer seitlichen Beschleunigung und zum Ausgeben eines Beschleunigungssignals an die Steuereinrichtung.

Eine Lenkbewegungs-Erfassungseinrichtung dient zum Erfassen einer Lenkbewegung eines Fahrzeuglenkrades und Ausgeben eines Lenksignals an die Steuereinrichtung, wobei die Steuereinrichtung zum Bestimmen eines Beschleunigungssignals für eine seitliche Beschleunigung aus dem Lenksignal und einer Fahrzeuggeschwindigkeit ausgebildet ist.

Bei der bevorzugten Ausgestaltung findet somit die Verstellung einer Wange als Sitzabschnitt-Verstellelement über ein integriertes und raumsparendes Schneckenspindelgetriebe statt. Raumsparend wird dabei der Verstellweg über ein Gleit/Rollenkeilprinzip realisierbar. Dies ermöglicht einen Direktantrieb und entsprechend einen geringeren Bauraum. Außerdem werden hohe Verstellkräfte und hohe Verstellgeschwindigkeiten ermöglicht, welche den Einsatz eines automatischen Steuersystems entsprechend der Schaltungsanordnung ermöglichen.

Ausgebildet wird somit eine kompakte Antriebseinheit, welche sich in die meist sehr beengten Bauraumgegebenheiten einer Kfz-Sitzlehne mit direkt angeflanschtem oder ortsfremd positioniertem Motor, insbesondere Gleichspannungs- oder Schrittmotor, integrieren lässt. In Verbindung mit einem Erfassungssystem, beispielsweise auf Basis einer Hall-Sensorik oder eines Potentiometers, wird eine Komfortverstellung ermöglicht, wobei auch fahrdynamische Verstellungen nahezu in Echtzeit oder in Echtzeit aufgrund der sehr kurzen Verstellzeiten realisiert werden können. Insbesondere in Verbindung mit einem Navigationssystem und entsprechend einer möglichen Vorausberechnung zu erwartender Fahrmanöver mit seitlich wirkenden Kräften sind fahrdynamische Verstellungen zur Erhöhung des Komforts und der Fahrsicherheit umsetzbar.

Mit Blick auf den kompakten, platzsparenden Aufbau mit nur wenigen Bauelementen ist auch eine kostengünstige Umsetzung sowie eine schnelle und kostengünstige Reparatur im Schadensfall möglich.

Ausführungsbeispiele der Erfindung werden nachfolgend anhand der Zeichnung näher erläutert. Es zeigen:
- Fig. 1, 2: ein erstes Ausführungsbeispiel einer Fahrzeug-Sitzabschnitt-Verstellvorrichtung zum Verstellen einer Sitzseitenwange in zwei verschiedenen perspektivischen Ansichten;
- Fig. 3, 4: ein zweites Ausführungsbeispiel einer Fahrzeug-Sitzabschnitt-Verstellvorrichtung in schematischer Darstellung;
- Fig. 5, 6: ein drittes Ausführungsbeispiel einer Fahrzeug-Sitzabschnitt-Verstellvorrichtung; und
- Fig. 7: ein viertes Ausführungsbeispiel einer Fahrzeug-Sitzabschnitt-Verstellvorrichtung.

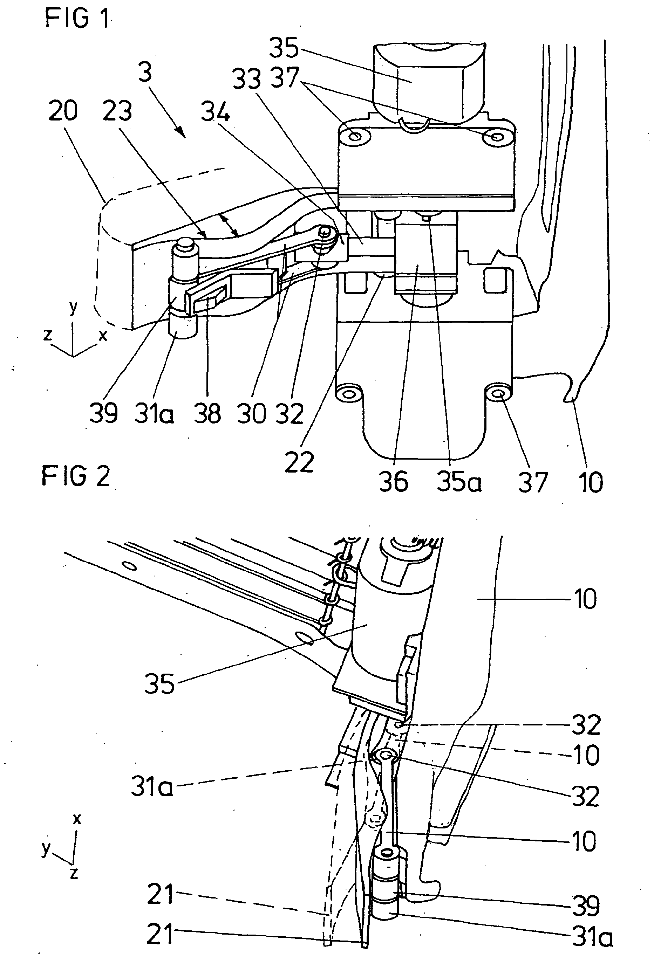

Wie dies aus den Fig. 1 und 2 ersichtlich ist, besteht die Fahrzeug-Sitzabschnitt-Verstellvorrichtung im Wesentlichen aus einem Spindelantrieb und einem Hebelmechanismus.

Ein Sitz eines Fahrzeugs, insbesondere Kraftfahrzeugs, weist einen Sitzrahmen 10 auf. Der Sitzrahmen 10 trägt die wesentlichen Grundbestandteile des Sitzes und dient außerdem zur Befestigung des Sitzes am Fahrzeug. Grundelemente eines Sitzes sind dabei die eigentliche Sitzfläche mit seitlichen Seitenwangen als Sitzabschnitte 21 der Sitzfläche sowie der Lehne zum Abstützen eines Rückens mit seitlichen Lehnenelementen als weiteren Sitzabschnitten. Die Fahrzeug-Sitzabschnitt-Verstellvorrichtung dient dabei zum Verstellen der seitlichen Lehnenabschnitte oder der Seitenwangen 21 der Sitzfläche, um die Lehnenbreite bzw. die Sitzbreite an die Bedürfnisse der auf dem Sitz sitzenden Person anzupassen. Außerdem können mit einer entsprechenden automatischen Steuerung Breiten-Verstellungen der Seitenwangen bzw. Lehnenseitenabschnitte abhängig von seitlich auf die sitzende Person wirkenden Fliehkräften durch Verbreiterung auf der Seite durchgeführt werden, die der Fliehkraft entgegen gerichtet ist.

Die Seitenwange und die seitlichen Lehnenabschnitte eines Sitzes bestehen üblicherweise aus einem Sitzpolster 20, welches von einem Bezug überzogen ist. Zur seitlichen Verstellung des Sitzpolsters 20 dient ein Sitzabschnitt-Verstellelement 21, welches bei den dargestellten Ausführungsbeispielen an einem Verstellelement-Lager 22 um dieses verschwenkbar gelagert ist. Das Verstellelement-Lager 22 ist direkt oder indirekt ortsfest mit dem Sitzrahmen verbunden.

Zum Verstellen des Sitzabschnitt-Verstellelements 21 dient eine Verstelleinrichtung mit einem Hebel 30. Ein Hebelendelement in Form eines Stiftes oder von Rollen 31a gleitet längs einem Verstellelement-Widerlager 23. Beim ersten Ausführungsbeispiel wird das Verstellelement-Widerlager 23 durch die Seite des Sitzabschnitt-Verstellelements 21 ausgebildet, welche dem Sitzpolster 20 gegenüber liegend angeordnet ist. Das Verstellelement-Widerlager 23 ist dabei so verlaufend geformt, dass das Sitzabschnitt-Verstellelement 21 bei einer insbesondere linearen Bewegung des Hebels 30 bzw. der Rollen 31a längs des Verstellelement-Widerlagers 23 um das Verstellelement-Lager 22 verschwenkt wird. Dadurch wird das Sitzabschnitt-Verstellelement 21 in Richtung des Sitzpolsters 20 bzw. in entgegengesetzter Richtung von diesem weg verschwenkt. Optional kann für die Zurückverstellung eine Rückstellfeder das Sitzabschnitt-Verstellelement 21 in eine Grundposition entgegen der Kraft des Hebels 30 vorspannen.

Die Form des Verstellelement-Widerlagers 23, welches durch die Rückseite des Sitzabschnitt-Verstellelements 21 ausgebildet wird, wird durch eine über die Länge des Sitzabschnitt-Verstellelements 21 unterschiedliche Breite b von diesem vorgegeben. Während das Sitzabschnitt-Verstellelement 21 vorderseitig, d. h. vom Verstellelement-Lager 22 abgewandt, schmal ausgebildet ist, nimmt die Breite b auf dem nächsten Abschnitt in Richtung des Verstellelement-Lagers 22 zu, wobei das Verstellelement-Widerlager 23 einen aus Sicht des Hebels 30 vorzugsweise konkaven Verlauf hat. Durch das Entlanggleiten des Hebels 30 bzw. von dessen Rollen 31a von dem vorderseitigen Ende des Sitzabschnitt-Verstellelements 21 in Richtung des Verstellelement-Lagers 22 längs einer geradlinigen Bahn wird das Sitzabschnitt-Verstellelement 21 entsprechend in Richtung des Sitzpolsters 20 gedrückt. Die geradlinige Bahn wird dabei durch ein Hebel- bzw. Ausleger-Widerlager 38 ausgebildet, welches relativ zum Verstellelement-Lager 22 ortsfest angeordnet ist.

Zum Antreiben des Hebels 30 dient ein Spindelantrieb 35, welcher relativ zum Sitzrahmen 10 ortsfest gelagert ist. Der Spindelantrieb 35 ist beispielsweise direkt über Verstelleinrichtungs-Befestigungseinrichtungs-Elemente 37, z. B. Schrauben, am Sitzrahmen 10 befestigt. Der Spindelantrieb 35 treibt eine Antriebswelle 35a an, welche über ein Schneckengetriebe 36 eine Spindel 33 antreibt. Dadurch kann der Spindelantrieb 35 in einer Richtung senkrecht zur Spindel 33 und den weiteren Elementen der Verstelleinrichtung 3 platzsparend im Sitz angeordnet werden.

Auf der Spindel 33, die z. B. am Sitzrahmen 10, am Spindelantrieb 35 gelagert ist, sitzt eine Spindelmutter 34, welche ein Hebel- bzw. Ausleger-Lager 32 zum Lagern des Hebels 30 aufweist. Durch das Drehen der Spindel 33 bewegt sich die Spindelmutter 34 auf der Spindel 33 in einer Vorwärts- bzw. Rückwärtsrichtung. Entsprechend wird das am Hebel-Lager 32 gelagerte Ende des Hebels 30 längs der Spindel 33 vor- und zurückbewegt. Das andere Ende des Hebels 30, an dem als Ausleger 31 die Rollen 31a gelagert sind, wird entsprechend längs des Verstellelement-Widerlagers 23 vor- und zurückbewegt.

Um eine Kraft auf das Verstellelement-Widerlager 23 ausüben zu können, weist der Hebel 30 an seinem vorderseitigen Ende außer den Rollen 31a ein Hebel-Widerlager-Gleitelement 39 auf, welches über der dem Verstellelement-Widerlager 23 zugewandten Seite des Hebel-Widerlagers 38 entlanggleitet.

Das Hebel-Widerlager 38 ist bei der bevorzugten Ausführungsform an dem vorderen Ende der Spindel 33 derart gelagert, dass es bei der Rotation der Spindel 33 nicht mitrotiert. Die Spindel 33 ist wiederum derart in der Verstelleinrichtung 3 und dem Schneckengetriebe 36 gelagert, dass sie eine für das Hebel-Widerlager 38 ortsfeste Verbindung zum Spindelantrieb 35 und darüber zum Sitzrahmen 10 ausbildet.

Außerdem ist das Verstellelement-Lager 22 zum Lagern des Sitzabschnitt-Verstellelements 21 an dem Schneckengetriebe 36 oder direkt an dem Spindelantrieb 35 und darüber am Sitzrahmen 10 befestigt.

Um eine insbesondere in der Grundstellung möglichst platzsparende und lineare Ausrichtung aller Elemente der Verstelleinrichtung und des Sitzabschnitt-Verstellelements 21 zu ermöglichen, weist das Sitzabschnitt-Verstellelement 21 eine zentrale Ausnehmung 25 auf, welche bei der dargestellten Ausführungsform sogar als durchgehende Öffnung durch das Sitzabschnitt-Verstellelement hindurch ausgebildet ist. Die Grundstellung ist in Fig. 1 sowie mit durchgezogenen Linien in Fig. 2 dargestellt. In der Grundstellung sind das vordere Ende der Spindel 33, das an dieser gelagerte Ende des Hebel-Widerlagers 38 und ein Teil des Hebels 30 in der Verstellelement-Ausnehmung 25 aufgenommen. In dieser Stellung befindet sich die Spindelmutter 34 am vorderen Ende der Spindel 33.

Bei einer Bewegung der Spindelmutter 34 in Richtung des rückseitigen Endes der Spindel 33 zieht die Spindelmutter 34 über das Hebel-Lager 32 den Hebel 30 und damit die an diesem vorderseitig gelagerten Rollen 31a in rückwärtige Richtung. Das Hebel-Widerlager-Gleitelement 39 gleitet dabei über das Hebel-Widerlager 38, welches einen Verlauf schräg zur Längsrichtung der Spindel 33 aufweist. Außerdem gleiten die Rollen 31a längs der Fläche des Verstellelement-Widerlagers 23, wobei das Sitzabschnitt-Verstellelement 21 und damit das Sitzpolster 20 in einer Richtung vom Hebel-Widerlager 38 und von der Spindel 33 weg in einer im Wesentlichen vorderseitigen Richtung gedrückt werden. Die entsprechende Endstellung ist in Fig. 2 gestrichelt dargestellt.

Bei der dargestellten Ausführungsform ist eine symmetrische Anordnung einer Vielzahl der genannten Elemente vorgesehen, um eine gleichmäßige Kraftverteilung und Bewegung zu unterstützen. So ist beidseits der Spindelmutter 34 jeweils ein Hebel 30 gelagert, wobei die beiden Hebel 30 im weiteren Verlauf das Hebel-Widerlager 38 umgreifen und vorderseitig von diesem das Hebel-Widerlager-Gleitelement 39 zwischen sich aufnehmen. Die Rollen 31a sind beidseits dieser vorderseitigen Anordnung angeordnet.

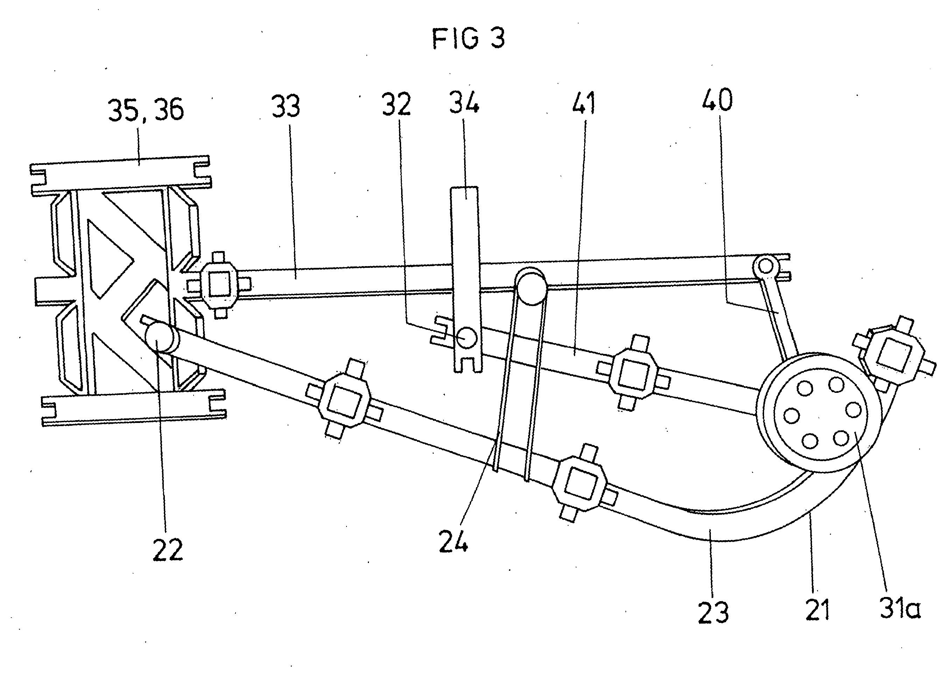

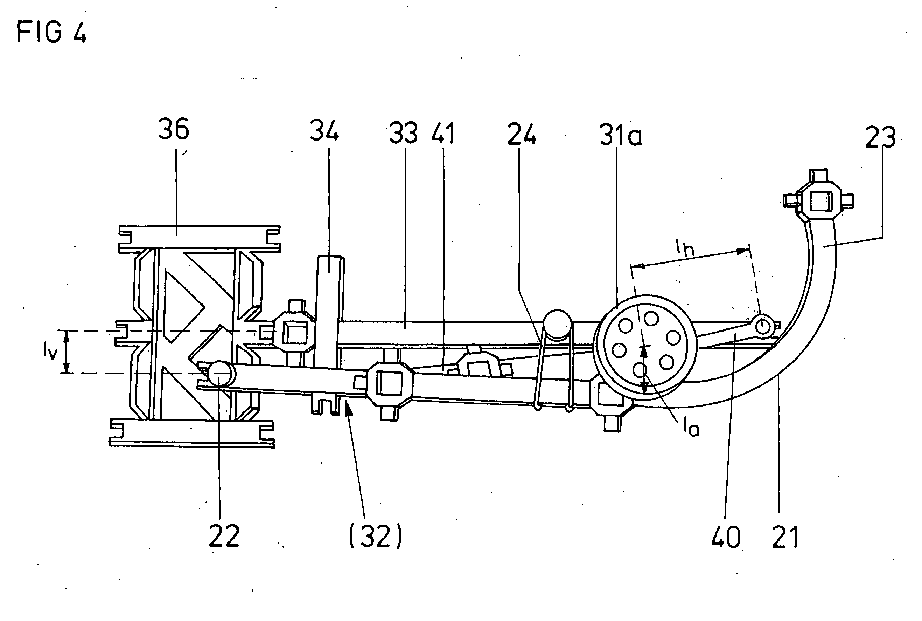

Anhand der Fig. 3 und 4 ist das zweite Ausführungsbeispiel schematisch mit Blick auf die räumliche Anordnung der einzelnen Bauelemente dargestellt, um das Funktionsprinzip zu veranschaulichen. Funktionell oder baulich vergleichbare Bauelemente tragen die gleichen Bezugszeichen wie beim ersten Ausführungsbeispiel.

Durch ein Schneckengetriebe 36 führt wiederum eine Spindel 33, auf welcher eine Spindelmutter 34 je nach Rotationsrichtung der Spindel 33 vor- oder zurückbewegt wird. An der Spindelmutter 34 ist wiederum ein Hebel-Lager 32 angeordnet, an dem ein Hebel 41 mit seinem rückseitigen Ende gelagert ist. Am vorderseitigen Ende ist an dem Hebel 41 ein seitlich in Richtung des Sitzabschnitt-Verstellelements 21 ragender Ausleger 31a befestigt oder gelagert. Bei der dargestellten Ausführungsform handelt es sich bei dem Ausleger 31a um eine Rolle 31a. Das Sitzabschnitt-Verstellelement 21 zum Verstellen eines Sitzpolsters ist mit seinem rückseitigen Ende über ein Verstellelement-Lager 22 an dem Gehäuse des Schneckengetriebes 36 gelagert. Zum vorderseitigen Ende hin verläuft das Sitzabschnitt-Verstellelement 21 mit seiner dem Sitzpolster abgewandten und dem Hebel 41 und der Rolle 31a zugewandten Seite konkav bogenförmig.

Anstelle eines starren Hebel- bzw. Ausleger-Widerlagers (38) ist bei diesem Ausführungsbeispiel am vorderen Ende der Spindel 33 ein mit dieser nicht mitrotierendes Gelenk zur Lagerung einer Führungsstange 40 vorgesehen. Das andere Ende der Führungsstange 40 ist am vorderen Ende des als Koppelstange 41 ausgebildeten Hebels 41 gelagert. Die Rolle 31a bewegt sich somit beim Vorbewegen bzw. Zurückbewegen der Spindelmutter und damit des Hebels 41 nicht auf einer geradlinigen sondern auf einer kreisförmigen Bahn um den Lagerpunkt am vorderen Ende der Spindel 33 herum. Je nach Stellung der Rolle 31a wird durch diese das Sitzabschnitt-Verstellelement 21 in einer zur Spindel 33 seitlichen Richtung vor- oder zurückbewegt.

Die Lagerung der Führungsstange 40 kann alternativ auch an einem Rahmenelement erfolgen, welches sich parallel zur Spindel 33 erstreckt und ggf. auch das vordere Ende der Spindel 33 abstützend lagert. Bei einer alternativen Ausführungsform ist es auch möglich, anstelle eines Spindelantriebs senkrecht zur Spindel 33 und eines entsprechend erforderlichen Schneckengetriebes 36 zur Umsetzung der Rotation vom Spindelantrieb auf die Spindel 33 einen Antrieb mit der Spindel 33 als Antriebswelle oder einer parallel zur Spindel verlaufenden Antriebswelle einzusetzen.

Bei dem dargestellten zweiten Ausführungsbeispiel wird das Sitzabschnitt-Verstellelement mit Hilfe eines elastischen Elements, beispielsweise eines Gummizugs oder einer Feder 24 als Vorspanneinrichtung in Richtung der Spindel 33 bzw. entgegengesetzt zur Richtung des zu verstellenden Sitzpolsters vorgespannt.

Wie aus Fig. 4 ersichtlich, wird bei diesem Ausführungsbeispiel der Einsatz von Hebelkräften zur Optimierung der Wirkung ausgenützt. Die Führungsstange 40 weist eine Hebellänge 1ₕ auf, mit welcher der Lagerpunkt der Rolle 31a um das vordere Ende der Spindel 33 verschwenkt wird. Außerdem wirkt in seitlicher Richtung von dem Lagerpunkt der Rolle 31a ein weiterer Hebelarm mit einer Auslegerlänge 1ₐ, welche dem Radius der Rolle 31a entspricht. Durch den Einsatz einer Rolle 31a anstelle eines starren seitlichen Auslegers wirkt diese Auslegerlänge 1ₐ unabhängig von der Position des vorderen Endes der Führungsstange 40 bzw. zugleich des Hebels 30 relativ zu. dem Kontaktpunkt an dem Verstellelement-Widerlager 23, d. h. der Seite des Sitzabschnitt-Verstellelements 21, welche der Rolle 31a zugewandt ist. Je nach Bauform ist auch ein relativ zur Längsachse der Spindel 33 seitlich um eine Versatzlänge 1ᵥ versetzter Lagerpunkt als Verstellelement-Lager 22 für das Sitzabschnitt-Verstellelement 21 vorteilhaft.

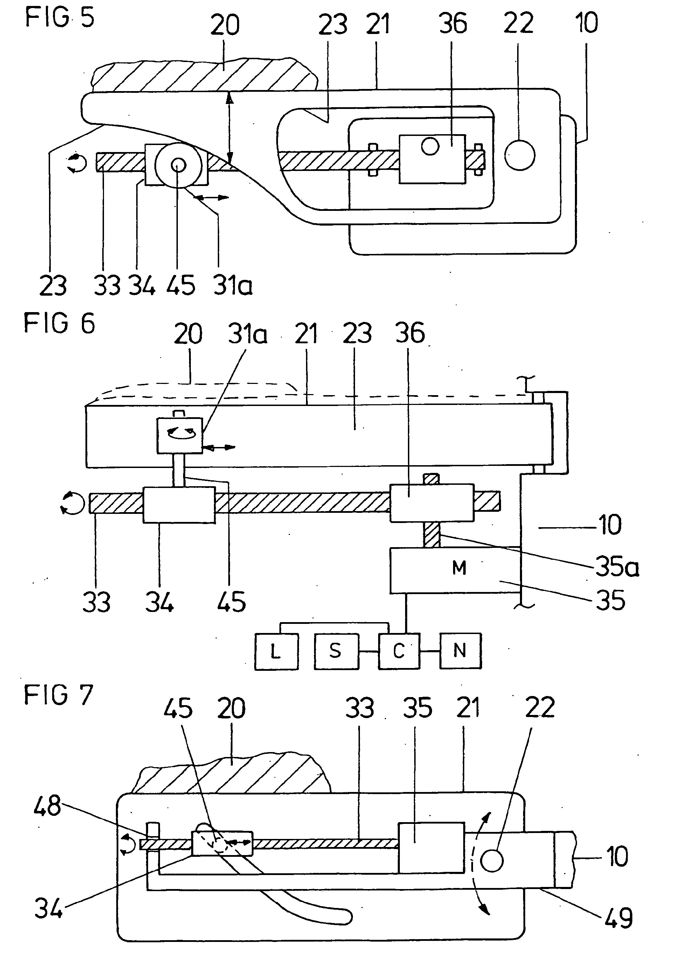

Bei der Ausführungsform des dritten Ausführungsbeispiels gemäß Fig. 5 und 6 werden im Gegensatz zu den beiden ersten Ausführungsbeispielen keine Hebel durch die Spindel verstellt. Wie bei den übrigen Ausführungsbeispielen, gleitet jedoch wiederum ein durch eine Spindel vor- oder zurückbewegtes Auslegerelement bzw. eine Rolle längs eines Verstellelement-Widerlagers, welches einen angepassten Verlauf aufweist.

Am Sitzrahmen 10 oder einem am Sitzrahmen 10 befestigten Verstellvorrichtungs-Rahmen ist über ein Verstellelement-Lager 22 ein Sitzabschnitt-Verstellelement 21 verschwenkbar gelagert. Das Sitzabschnitt-Verstellelement 21 erstreckt sich im Wesentlichen länglich geformt von dem Verstellelement-Lager 22, wobei an der einen Längsseite ein zu verstellendes Sitzpolster 20 anliegt oder befestigt ist. Die gegenüberliegende Längsseite ist als Verstellelement-Widerlager 23 ausgebildet und weist eine sich in Draufsicht zur Vorderseite hin verjüngende Breite b auf. Vorzugsweise ist der Verlauf wiederum bogenförmig und konkav, wobei der Verlauf u. a. abhängig von der gewünschten Verstellgeschwindigkeit des Sitzpolsters 20 gewählt ist. Parallel zur Längserstreckung des Sitzabschnitt-Verstellelements 21 in z. B. dessen Grundstellung verläuft wiederum eine Spindel 33, welche von einem Spindelantrieb, ggf. über ein Schneckengetriebe 36 angetrieben wird. Auf der Spindel 33 ist eine Spindelmutter 34 gelagert, die einen seitlich abstehenden Ausleger 45 trägt. Entweder der Ausleger 45 oder, wie dargestellt, eine auf diesem gelagerte Rolle 31a gleitet mit dem Seitenumfang längs des Verstellelement-Widerlagers 23.

Bei dieser Ausführungsform verläuft die Spindel 33 vorzugsweise oberhalb, unterhalb oder in einer entsprechenden Ausnehmung innerhalb des Sitzabschnitt-Verstellelements 21, so dass der Ausleger 45 bei einer vorwärts gerichteten oder rückwärts gerichteten Bewegung der Spindelmutter 34 senkrecht zur Längserstreckung des Sitzabschnitt-Verstellelements 21 ausgerichtet ist und dessen Umfang bzw. der Umfang der Rolle 31a längs des Verstellelement-Widerlagers 23 gleitet.

Bei dem in Fig. 7 dargestellten Ausführungsbeispiel ist der Aufbau im Wesentlichen ähnlich dem des dritten Ausführungsbeispiels. Ein Sitzabschnitt-Verstellelement 21 ist über ein Verstellelement-Lager 22 an einem Sitzabschnitt-Verstellvorrichtungs-Rahmen 49 gelagert. Der Sitzabschnitt-Verstellvorrichtungs-Rahmen 49 ist direkt oder indirekt starr am Sitzrahmen befestigt. Das Sitzabschnitt-Verstellelement 21 erstreckt sich wiederum in einer Längsrichtung längs eines Sitzpolsters 20, welches in zur Längsrichtung des Sitzabschnitt-Verstellelements 21 im Wesentlichen seitlichen Richtung zu verstellen ist.

Anstelle einer bogenförmig verlaufenden Seitenwandung als Verstellelement-Widerlager weist das Sitzabschnitt-Verstellelement 21 in seiner flächigen Oberfläche eine bogenförmig verlaufende Nut 46 als Verstellelement-Widerlager auf.

Parallel zur Oberfläche des Sitzabschnitt-Verstellelements 21 und in mit Blick auf eine von dessen Stellungen gleicher Längsrichtung erstreckt sich eine Spindel 33, welche von einem Spindelantrieb 35 angetrieben wird. Der Spindelantrieb 35 ist ebenfalls am Sitzabschnitt-Verstellvorrichtungs-Rahmen 49 befestigt. Vorteilhafterweise ist das vordere Ende der Spindel 33 über ein Spindellager 48 ebenfalls am Sitzabschnitt-Verstellvorrichtungs-Rahmen 49 gelagert, so dass eine seitliche Verbiegung der Spindel 33 bei der Bewegung einer Spindelmutter 34 längs der Spindel 33 vermieden wird.

An der Spindelmutter 34 sitzt wiederum ein Ausleger 45, welcher sich in Richtung des Sitzabschnitt-Verstellelements 21 erstreckt und mit seinem vorderen Ende in die Nut 46 eingreift. Durch eine Bewegung der Spindelmutter 34 in Vorwärtsrichtung oder Rückwärtsrichtung längs der Spindel 33 wird der Ausleger 45 innerhalb der Nut 46 bewegt, wodurch das Sitzabschnitt-Verstellelement 21 entsprechend um dessen Verstellelement-Lager 22 verschwenkt und dadurch das Sitzpolster 20 in seitlicher Richtung bewegt wird.

Bei diesem Ausführungsbeispiel entfallen zwar Hebelkräfte, jedoch ist ein besonders kompakter Aufbau gewährleistet. Durch die Nut 46, die den Ausleger 45 beidseitig begrenzt, wird das Sitzabschnitt-Verstellelement 21 bei der Bewegung des Auslegers 45 nicht nur in einer Richtung, sondern auch in der Rückrichtung aktiv bewegt, d. h. in beiden Richtungen um das Verstellelement-Lager 22 verschwenkt, so dass eine Rückstellfeder entbehrlich ist.

Neben den durch die verschiedenen Ausführungsbeispiele dargestellten Variationsmöglichkeiten des Grundgedankens einer Sitzabschnitt-Verstellvorrichtung sind auch weitere Kombinationen der Einzelelemente der verschiedenen Ausführungsbeispiele oder zusätzliche Ergänzungen und Abwandlungen möglich. Beispielsweise kann zwischen dem Sitzabschnitt-Verstellelement und dem Sitzpolster 20 ein weiteres Element eingesetzt sein. Auch kann anstelle einer Rückstellfeder ein Polsterbezug eingesetzt werden, welcher elastisch ist und bei Rückstellung des Sitzabschnitt-Verstellelements das Sitzpolster ebenfalls in eine Grundstellung zurückversetzt.

Wie dies aus Fig. 6 ersichtlich ist, ist der Spindelantrieb 35 vorzugsweise ein elektromotorischer Antrieb M, welcher von einer Steuereinrichtung C angesteuert wird. Die Steuereinrichtung C ist mit einer Beschleunigungs-Bestimmungseinrichtung S zum Bestimmen einer momentan wirkenden und/oder einer zu erwartenden Beschleunigung in Seitenrichtung des Sitzes gekoppelt. Dies ermöglicht, dass die Steuereinrichtung C den Spindelantrieb 35, M derart ansteuert, dass das Sitzabschnitt-Verstellelement 21 die Breite des zu verstellenden Sitzabschnitts auf der Seite des Sitzes zeitweilig vergrößert, welche der Beschleunigungsrichtung gegenüberliegt. Eine Seitenwange und/oder ein Rücklehnen-Seitenabschnitt des Sitzes werden somit auf der Sitzseite vergrößert, in deren Richtung eine Fliehkraft auf die im Sitz sitzende Person wirkt, um die Sitzstabilität für die Person bei Kurvenfahrten zu erhöhen.

Die Beschleunigungs-Bestimmungseinrichtung S kann dabei ein Beschleunigungssensor zum Erfassen einer seitlichen Beschleunigung und Ausgeben eines Beschleunigungssignals an die Steuereinrichtung C sein. Alternativ oder zusätzlich kann als Beschleunigungs-Bestimmungseinrichtung S auch eine Lenkbewegungs-Erfassungseinrichtung L zum Erfassen einer Lenkbewegung eines Fahrzeuglenkrades und Ausgeben eines Lenksignals an die Steuereinrichtung C sein. In diesem Fall ist die Steuereinrichtung C zum Bestimmen eines Beschleunigungssignals für eine seitliche Beschleunigung aus dem Lenksignal und einer momentanen Fahrzeugbewegung, insbesondere Fahrzeuggeschwindigkeit ausgebildet bzw. programmiert.

Erfindungsgemäß ist ein Navigationssystem-Anschluss zum Anschluss eines Navigationssystems N an die Steuereinrichtung C vorgesehen. Aus dem Navigationssystem N werden Wegeverlaufdaten eines vorausliegenden Straßenverlaufs übertragen, wobei die Steuereinrichtung C zum Bestimmen einer zu erwartenden seitlichen Beschleunigung mit Hilfe der Wegeverlaufdaten und Daten einer momentanen Fahrzeugbewegung, d. h. insbesondere der Fahrzeuggeschwindigkeit ausgebildet und programmiert ist Dies ermöglicht nicht nur eine nachträgliche Reaktion der Steuereinrichtung auf bereits einsetzende seitliche Beschleunigungen sondern sogar eine Vorausberechnung und somit zeitgleiche oder vorherige Verstellung der Sitzabschnittsbreite zu einer entsprechenden seitlichen Beschleunigung.

### Bezugszeichenliste:

- 10: Sitzrahmen
- 20: Sitzpolster
- 21: Sitzabschnitt-Verstellelement
- 22: Verstellelement-Lager
- 23: Verstellelement-Widerlager
- 24: Feder
- 25: Verstellelement-Ausnehmung
- 3: Verstelleinrichtung
- 30: Hebel
- 31: Ausleger / Hebelendelement
- 31a: Rolle
- 32: Hebel-Lager / Ausleger-Lager
- 33: Spindel
- 34: Spindelmutter
- 35, M: Spindelantrieb
- 35a: Antriebswelle
- 36: Schneckengetriebe
- 37: Verstelleinrichtung-Befestigungseinrichtung
- 38: Hebel / Ausleger-Widerlager
- 39: Hebel / Ausleger-Widerlager-Gleitelement
- 40: Führungsstange
- 41 (30): Koppelstange
- 42 (32): Koppelgelenk
- 45: Ausleger
- 46: Nut
- 48: Spindel-Lager
- 49: Sitzabschnitt-Verstellvorrichtungs-Rahmen
- 1ₕ: Länge Hebel
- 1ₐ: Länge Ausleger
- 1ᵥ: Länge Versatz
- b: Breite Sitzabschnitt-Verstellelement
- C: Steuereinrichtung
- S: Sensor
- L: Lenkbewegungssensor
- N: Navigationssystem

## Patentansprüche

1. Fahrzeug-Sitzabschnitt-Verstellvorrichtung mit einer Schaltungsanordnung zum Ansteuern eines Antriebs (35, M), wobei die Fahrzeug-Sitzabschnitt-Verstellvorrichtung
a) ein Sitzabschnitt-Verstellelement (21) zum Verstellen der Breite b eines Sitzabschnitts (20) eines Sitzes in einer Verstellrichtung,
b) eine Befestigungseinrichtung (22, 10) zum beweglichen Lagern des Sitzabschnitt-Verstellelements (21) am Sitz,
c) eine antreibbare Verstelleinrichtung zum Verstellen des Sitzabschnitt-Verstellelements (21) aus einer bzw. zu einer Grundstellung gegenüber der Befestigungseinrichtung (22, 10),
d) einen elektromotorischen Antrieb (M, 35) als dem Antrieb zum Antreiben der Verstelleinrichtung (31a; 45),
e) eine Beschleunigungs-Bestimmungseinrichtung (S) zum Bestimmen einer momentan wirkenden und/oder zu erwartenden Beschleunigung in Seitenrichtung des Sitzes und
f) eine Steuereinrichtung (C) zum Ansteuern des Antriebs (M) derart, dass das Sitzabschnitt-Verstellelement (21) zumindest die Breite einer Seitenwange auf der Seite des Sitzes zeitweilig vergrößert, welche der Richtung der Beschleunigung entgegen gerichtet ist, aufweist,
**gekennzeichnet durch**
einen Navigationssystem-Anschluss (N) zum Übertragen von Wegeverlaufdaten eines vorausliegenden Straßenverlaufs, wobei die Steuereinrichtung (C) zum Bestimmen einer zu erwartenden seitlichen Beschleunigung mit Hilfe der Wegeverlaufdaten und einer momentanen Fahrzeugbewegung ausgebildet ist.

2. Schaltungsanordnung nach Anspruch 1 mit
einem Beschleunigungssensor (S) zum Erfassen einer seitlichen Beschleunigung und Ausgeben eines Beschleunigungssignals an die Steuereinrichtung (C).

3. Schaltungsanordnung nach Anspruch 1 oder 2 mit einer Lenkbewegungs-Erfassungseinrichtung (L) zum Erfassen einer Lenkbewegung eines Fahrzeuglenkrades und Ausgeben eines Lenksignals an die Steuereinrichtung (C), wobei die Steuereinrichtung (C) zum Bestimmen eines Beschleunigungssignals für eine seitliche Beschleunigung aus dem Lenksignal und einer Fahrzeuggeschwindigkeit ausgebildet ist.

## Claims

1. Vehicle seat section adjustment apparatus comprising a circuit arrangement for actuating a drive (35, M), wherein the vehicle seat section adjustment apparatus comprises
a) a seat section adjustment element (21) for adjusting the width b of a seat section (20) of a seat in an adjustment direction,
b) an attachment device (22, 10) for movably mounting the seat section adjustment element (21) on the seat,
c) a drivable adjustment device for adjusting the seat section adjustment element (21) out of or into a basic position with respect to the attachment device (22, 10),
d) an electric motor drive (M, 35) as the drive for driving the adjustment device (31a; 45),
e) an acceleration determination device (S) for determining a current and/or expected acceleration in the lateral direction of the seat, and
f) a control device (C) for actuating the drive (M) in such a way that the seat section adjustment element (21) at least temporarily increases the width of a side cheek on the side of the seat which is directed opposite to the direction of the acceleration,
**characterised by**
a navigation system connection (N) for transmitting distance-covered data for a specified road course, wherein the control device (C) is designed to determine an expected lateral acceleration using the distance-covered data and a current vehicle movement.

2. Circuit arrangement according to claim 1, comprising an acceleration sensor (S) for detecting a lateral acceleration and outputting an acceleration signal to the control device (C).

3. Circuit arrangement according to claim 1 or 2, comprising a steering movement detection device (L) for detecting a steering movement of a vehicle steering wheel and outputting a steering signal to the control device (C), wherein the control device (C) is designed to determine an acceleration signal for a lateral acceleration from the steering signal and a vehicle speed.

## Revendications

1. Dispositif de réglage d'une partie de siège de véhicule comportant un circuit de commutation pour commander un entraînement (35, M), le dispositif de réglage d'une partie de siège de véhicule comprenant :
a) un élément de réglage de partie de siège (21) pour régler la largeur (b) d'un élément de siège (20) dans une direction de réglage,
b) une première installation de fixation (22, 10) pour recevoir de manière mobile, l'élément de réglage de la partie de siège (21) sur le siège,
c) une installation de réglage entraînée pour régler l'élément de réglage de la partie de siège (21) à partir d'une position de base ou vers une position de base par rapport à l'installation de fixation (22, 10),
d) un entraînement à moteur électrique (M, 35) comme entraînement de l'installation de réglage (31a ; 45),
e) une installation de détermination de l'accélération (S) pour déterminer une accélération à effet momentané et/ou prévisible, dans la direction latérale du siège, et
f) une installation de commande (C) pour commander l'entraînement (M) de façon que l'élément de réglage de la partie de siège (21), augmente momentanément au moins la largeur d'un flasque sur le côté du siège, qui est dans la direction opposée à la direction de l'accélération,
**caractérisé par**
un branchement (N) de système de navigation pour transmettre des données de tracé de trajet de la chaussée en amont, l'installation de commande (C) est réalisée pour déterminer l'accélération latérale à venir à l'aide des données de tracé de trajet et du mouvement instantané du véhicule.

2. Circuit selon la revendication 1, comportant un capteur d'accélération (S) pour saisir une accélération latérale et émettre un signal d'accélération pour l'installation de commande (C).

3. Circuit selon la revendication 1 ou 2, comportant une installation de saisie de mouvement de braquage (L) pour saisir un mouvement de braquage du volant du véhicule, et fournir un signal de braquage à l'installation de commande (C),
l'installation de commande (C) étant réalisée pour déterminer un signal d'accélération pour une accélération latérale à partir du signal de braquage et de la vitesse du véhicule.
